# EUROPÄISCHE PATENTSCHRIFT

(11) **EP 0 987 520 B1**
(45) Veröffentlichungstag und Bekanntmachung des Hinweises auf die Patenterteilung: **29.05.2002**
(21) Anmeldenummer: 99112997.4
(22) Anmeldetag: 06.07.1999
(51) Int. Cl.: G01C 25/00

(54) **Verfahren zur Herstellung eines Libellenkörpers**
Procedure for manufacturing a spirit level
Procédé de fabrication d'un niveau à bulle

(30) Priorität: 03.08.1998 AT 133798
(43) Veröffentlichungstag der Anmeldung: 22.03.2000
(73) Patentinhaber: Ing. Guido Scheyer SOLA-Messwerkzeuge, Gesellschaft m.b.H. & Co., A-6840 Götzis (AT)
(72) Erfinder: Hörburger, Walter, Dr., 6840 Götzis (AT)
(74) Vertreter: Hefel, Herbert, Dipl.-Ing.

(56) Entgegenhaltungen:
- EP-A- 0 455 979
- EP-A- 0 852 177
- DE-B- 1 266 517
- DE-C- 841 219
- DE-C- 4 427 068

## Beschreibung

Die Erfindung betrifft ein Verfahren zur Herstellung eines Libellenkörpers, der einen tonnenförmigen Hohlraum und Markierungen für eine Blase im Inneren des teilweise mit einer Flüssigkeit zu befüllenden, tonnenförmigen Hohlraumes aufweist, wobei zunächst ein mit einem zylindrischen Hohlraum versehener Kunststoffkörper, insbesondere in einem Spritzgießverfahren, hergestellt wird.

Libellen von Wasserwaagen bestehen üblicherweise aus einem Libellenkörper mit einem tonnenförmigen Hohlraum, der teilweise mit einer Flüssigkeit gefüllt ist, so daß sich in der Flüssigkeit eine Blase ausbildet, anhand derer die horizontale Position der Wasserwaage eingestellt werden kann. Dazu ist der Libellenkörper weiters mit Markierungen versehen, welche die Position der Blase bei einer horizontalen Ausrichtung der Wasserwaage angeben.

Ein herkömmliches Verfahren zur Herstellung eines derartigen Libellenkörpers besteht darin, in einem Spritzgießverfahren zunächst einen mit einer zylindrischen Bohrung versehenen Kunststoffkörper herzustellen. In der Folge wird die Zylinderbohrung tonnenförmig ausgedreht. Anschließend werden in die Wandung der tonnenförmigen Ausdrehung zwei voneinander distanzierte, kreisringförmige Nuten eingestochen und in die Nuten Sprengringe eingelegt, die als Markierung für die Blase in der Libelle dienen.

Aus der DE-PS 841 219 ist es weiters bekannt, anstelle des Einlegens von Sprengringen diese Nuten mit Lack auszufüllen.

Aus einem der Ausführungsbeispiele der DE-AS 1 266 517 ist es außerdem bekannt, den tonnenförmigen Hohlraum zusammen mit den darin ausgebildeten Nuten mit einer erstarrenden Masse zu füllen und diese anschließend mit Ausnahme des in den Nuten sich befindenden Teiles durch spanabhebende Bearbeitung wieder zu entfernen.

Aufgabe der Erfindung ist es, ein Verfahren der eingangs genannten Art bereitzustellen, durch welches die Herstellung eines Libellenkörpers mit einem tonnenförmigen Hohlraum und Markierungen für die Blase vereinfacht wird.

Erfindungsgemäß gelingt dies bei einem Verfahren der eingangs genannten Art dadurch, daß in die Wandung des zylindrischen Hohlraumes an den für die Markierungen vorgesehenen Stellen, vorzugsweise kreisringförmige, Nuten eingestochen werden, die Wandung des zylindrischen Hohlraumes und die Nuten mit einer Farbschicht versehen werden und der zylindrische Hohlraum tonnenförmig ausgedreht wird, wobei die Farbschicht mit Ausnahme jenes Teiles, der sich in den verbleibenden Nuten befindet, entfernt wird.

Gegenüber den bekannten Verfahren kann auf diese Weise ein Libellenkörper wesentlich zeit- und materialsparender hergestellt werden.

Weitere Vorteile und Einzelheiten der Erfindung werden im folgenden anhand der beiliegenden Zeichnung erläutert.

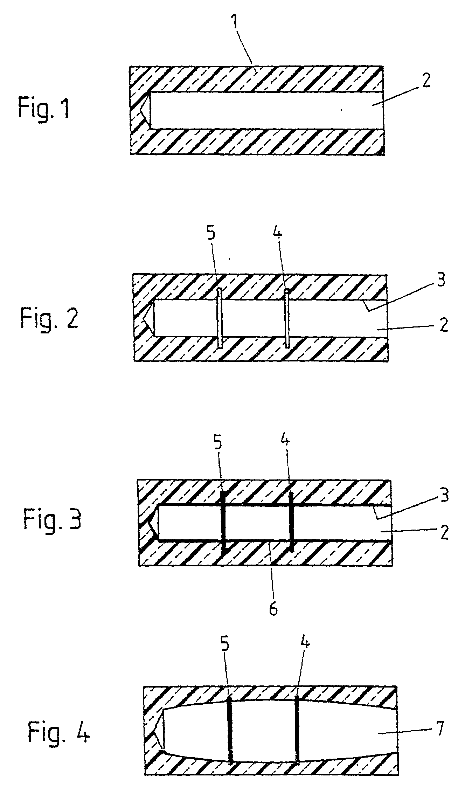

In diesen zeigen die Figuren 1 bis 4 Schnitte durch die Längsmittelebenen der verschiedenen Stadien eines nach dem erfindungsgemäßen Verfahren hergestellten Libellenkörpers.

Zur Herstellung eines Libellenkörpers wird zunächst in bekannter Weise in einem Spritzgießverfahren ein durchsichtiger Kunststoffkörper 1, beispielsweise aus Acrylglas, hergestellt, der einen zylindrischen Hohlraum 2 aufweist.

Entsprechend Fig. 2 werden anschließend in die Wandung 3 des zylindrischen Hohlraumes 2 an den für die Markierungen vorgesehenen Stellen Nuten 4, 5 eingestochen, welche sich kreisringförmig um die Längsachse des zylindrischen Hohlraumes 2 erstrecken.

Im nächsten Arbeitsschritt wird Farbe in den Hohlraum 2 eingesprüht, wodurch die Wandung 3 des zylindrischen Hohlraumes 2 und die Nuten 4, 5 mit einer Farbschicht 6 versehen werden, welche in Fig. 3 durch die gegenüber Fig. 2 verdickten Linien angedeutet ist. Anschließend wird der zylindrische Hohlraum tonnenförmig ausgedreht, wobei sich ein in Fig. 4 schematisch dargestellter, tonnenförmiger Hohlraum 7 ergibt. Beim Ausdrehen des zylindrischen Hohlraumes wird ein Teil der Tiefe der Nuten 4, 5 weggenommen, wobei die ursprüngliche Tiefe der Nuten aber so groß gewählt wurde, daß diese beim Ausdrehen nicht völlig verschwinden. In den verbleibenden Nuten 4, 5 verbleibt auch die zuvor aufgebrachte Farbschicht 6 und bildet die gewünschten Markierungen, während die restliche Farbe beim tonnenförmigen Ausdrehen des zylindrischen Hohlraumes entfernt wird.

In der Folge kann der tonnenförmige Hohlraum 7 mit einer geeigneten Flüssigkeit gefüllt werden, wobei ein Raum für eine Luftblase verbleibt, und geschlossen werden. Eine derartige Libelle kann nunmehr in eine Wasserwaage eingebaut werden.

### Legende zu den Hinweisziffern:

- 1: Kunststoffkörper
- 2: zylindrischer Hohlraum
- 3: Wandung
- 4: Nut
- 5: Nut
- 6: Farbschicht
- 7: tonnenförmiger Hohlraum

## Patentansprüche

1. Verfahren zur Herstellung eines Libellenkörpers, der einen tonnenförmigen Hohlraum und Markierungen für eine Blase im Inneren des teilweise mit einer Flüssigkeit zu befüllenden, tonnenförmigen Hohlraumes aufweist, wobei zunächst ein mit einem zylindrischen Hohlraum versehener Kunststoffkörper, insbesondere in einem Spritzgießverfahren, hergestellt wird, der in einem weiteren Arbeitsschritt tonnenförmig ausgedreht wird, **dadurch gekennzeichnet, daß** nach der Herstellung des mit dem zylindrischen Hohlraum versehenen Kunststoffkörpers zunächst in die Wandung (3) des zylindrischen Hohlraumes (2) an den für die Markierungen vorgesehenen Stellen, vorzugsweise kreisringförmige, Nuten (4, 5) eingestochen werden, in der Folge die Wandung (3) des zylindrischen Hohlraumes (2) und die Nuten (4, 5) mit einer Farbschicht (6) versehen werden und in der weiteren Folge der zylindrische Hohlraum (2) tonnenförmig ausgedreht wird, wobei die Farbschicht (6) mit Ausnahme jenes Teiles, der sich in den verbleibenden Nuten (4, 5) befindet, entfernt wird.

2. Verfahren nach Anspruch 1, **dadurch gekennzeichnet, daß** zum Versehen der verbleibenden Wandung des zylindrischen Hohlraums (2) und der Nuten (4, 5) mit einer Farbschicht Farbe in den mit den Nuten (4, 5) versehenen zylindrischen Hohlraum (2) eingesprüht wird.

## Claims

1. A method of manufacturing a spirit level comprising a barrel-shaped cavity and markers for a bubble inside the barrel-shaped cavity which is to be partly filled with a liquid, wherein first a plastics body provided with a cylindrical cavity is manufactured, in particular by injection moulding, and is then hollowed out into the shape of a barrel in a further working step, **characterised in that**, after the plastics body provided with the cylindrical cavity has been manufactured, first preferably circular grooves (4, 5) are cut into the wall (3) of the cylindrical cavity (2) at the points provided for the markers, next the wall (3) of the cylindrical cavity (2) and the grooves (4, 5) are provided with a coloured layer (6) and then the cylindrical cavity (2) is hollowed out into the shape of a barrel, during which the coloured layer (6) is removed, with the exception of that portion in the remaining grooves (4, 5).

2. A method according to claim 1, **characterised in that**, to provide the remaining wall of the cylindrical cavity (2) and the grooves (4, 5) with a coloured layer, paint is sprayed into the cylindrical cavity (2) provided with the grooves (4, 5).

## Revendications

1. Procédé de fabrication d'un corps de niveau à bulle, qui présente un espace creux en forme de barillet et des repères pour une bulle à l'intérieur de l'espace creux en forme de barillet à remplir en partie d'un liquide, dans lequel tout d'abord on fabrique un corps de matériau synthétique pourvu d'un espace creux cylindrique, en particulier par un procédé de moulage par injection, ledit corps étant creusé au tour en forme de barillet dans une autre étape de travail, **caractérisé en ce que**, après fabrication du corps de matériau synthétique pourvu d'un espace creux cylindrique, on ménage tout d'abord dans la paroi (3) de l'espace creux cylindrique (2), en des endroits destinés aux repères, des rainures de préférence annulaires (4,5), puis la paroi (3) de l'espace creux cylindrique (2) et les rainures (4,5) sont pourvues d'une couche de couleur (6) et, ensuite, l'espace creux cylindrique (2) est creusé au tour en forme de barillet, la couche de couleur (6) étant éliminée à l'exception de la partie qui se trouve dans les rainures restantes (4,5).

2. Procédé selon la revendication 1, **caractérisé en ce que**, pour pourvoir la paroi restante de l'espace creux cylindrique (2) et des rainures (4,5) d'une couche de couleur, on pulvérise de la couleur dans l'espace creux cylindrique (2) pourvu des rainures (4,5).
